(19) Europäisches Patentamt
European Patent Office
Office européen des brevets

(11) **EP 2 619 829 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(51) Int Cl.:
***H01M 4/90*** *(2006.01)*     ***H01M 4/86*** *(2006.01)*

(21) Anmeldenummer: **11761322.4**

(86) Internationale Anmeldenummer:
**PCT/EP2011/065947**

(22) Anmeldetag: **14.09.2011**

(87) Internationale Veröffentlichungsnummer:
**WO 2012/038312 (29.03.2012 Gazette 2012/13)**

(54) **WIEDERAUFLADBARE ENERGIESPEICHEREINHEIT**

RECHARGEABLE ENERGY STORAGE UNIT

UNITÉ D'ACCUMULATION D'ENERGIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2010 DE 102010041019**

(43) Veröffentlichungstag der Anmeldung:
**31.07.2013 Patentblatt 2013/31**

(73) Patentinhaber: **Siemens Aktiengesellschaft 80333 München (DE)**

(72) Erfinder:
• **GREINER, Horst**
**91301 Forchheim (DE)**
• **ZAMPIERI, Alessandro**
**Business Bay**
**Dubai (AE)**

(56) Entgegenhaltungen:
**WO-A2-02/099912     US-A- 3 977 901**
**US-A- 5 429 793**

EP 2 619 829 B1

**Beschreibung**

Die Erfindung betrifft eine wiederaufladbare Energiespeichereinheit, mit einer ersten und einer zweiten Elektrode, wobei der ersten Elektrode metallische Partikel aus einem im Ladebetrieb der Energiespeichereinheit reduzierbaren und im Entladebetrieb der Energiespeichereinheit oxidierbaren Metall zugeordnet sind, und einem zwischen den Elektroden angeordneten Elektrolyten.

Wiederaufladbare Energiespeichereinheiten basieren im Wesentlichen auf dem Prinzip elektrochemischer Zellen, d. h. der redoxbasierten Umsetzung von chemischer in elektrische Energie oder umgekehrt. Dabei werden üblicherweise an einer positiv geladenen Elektrode Oxidationsmittel, beispielsweise Sauerstoffionen aus Luftsauerstoff gebildet und durch einen zwischen der positiven und einer negativen Elektrode angeordneten und für das Oxidationsmittel, d. h. die z. B. gebildeten Sauerstoffionen, entsprechend durchlässigen Elektrolyten der negativen Elektrode zugeführt.

Bei wiederaufladbaren Energiespeichereinheiten ist das zu oxidierende Material, d. h. das Reduktionsmittel mittel- oder unmittelbarer Bestandteil der Energiespeichereinheit, weshalb der Energiespeichereinheit solange Energie entnommen werden kann, bis das Reduktionsmittel vollkommen oxidiert ist. Erst nach einem anschließenden Ladevorgang der Energiespeichereinheit mit elektrischer Energie über eine externe Quelle ist eine erneute Entladung der Energiespeichereinheit möglich. Die nähere Funktionsweise entsprechender wiederaufladbarer Energiespeichereinheiten ist hinlänglich bekannt.

Gattungsgemäße Energiespeichereinheiten mit Sauerstoffionen leitenden Elektrolyten haben bekanntermaßen Arbeitsbereiche bei Temperaturen oberhalb 500° C, da erst bei entsprechend hohen Temperatur hinreichende Gegebenheiten insbesondere betreffend die Aktivität bzw. Ionenleitfähigkeit der eingesetzten Materialien geschaffen sind, um die entsprechenden Vorgänge, wie etwa die elektrochemische Reduktion des Luftsauerstoffs zu Sauerstoffionen und weiter deren Bewegung durch den Elektrolyten ordnungsgemäß ablaufen lassen zu können.

Aufgrund der hohen thermischen Belastung treten bei wiederaufladbaren Energiespeichern insbesondere betreffend die Elektrode, die im Endladebetrieb als Anode geschaltet und in der Regel aus einem porösen Netzwerk metallischer Partikel gebildet ist oder der solche Partikel betriebsmäßig zugeordnet sind, regelmäßig Leistungseinbußen aufgrund von Degradationen insbesondere bedingt durch Agglomerationen der metallischen Partikel, was eine Reduzierung der aktiven Oberfläche des Elektrodenmaterials zur Folge hat und sich im Weiteren negativ auf dem Wirkungsgrad bzw. die Lebensdauer der Energiespeichereinheit auswirkt, auf.

Der Erfindung liegt daher das Problem zugrunde, eine wiederaufladbare Energiespeichereinheit mit einer verbesserten Langzeitstabilität, insbesondere bezüglich der der ersten Elektrode zugeordneten metallischen Partikel, anzugeben.

Dieses Problem wird erfindungsgemäß durch eine wiederaufladbare Energiespeichereinheit der eingangs genannten Art gelöst, welche sich dadurch auszeichnet, dass die metallischen Partikel zusätzlich ein eine Versinterung der metallischen Partikel hemmendes Material enthalten.

Untersuchungen zeigten, dass die Agglomeratbildung der metallischen Partikel überraschenderweise im Wesentlichen auf Versinterungsvorgänge an den Partikelgrenzflächen zurückzuführen ist, welche somit als Ursache der Partikelagglomeration angesehen werden.

Erfindungsgemäß sind daher die der ersten Elektrode zugeordneten metallischen Partikel ein Hybridmaterial, in dem vorzugsweise in guter Dispergierung das die Versinterung hemmende Material verteilt ist. Derart werden die insbesondere bezüglich der Leistungsfähigkeit bzw. der Lebensdauer der ersten Elektrode respektive der gesamten Energiespeichereinheit nachteilhaften Auswirkungen durch Sintervorgänge zwischen einzelnen metallischen Partikeln bzw. Agglomerationen mehrerer metallischer Partikel verhindert. Insofern bleibt die spezifische aktive Oberfläche respektive eine gegebenenfalls poröse Struktur der ersten Elektrode auch bei hohen Betriebstemperaturen im Bereich von 500 - 1000°C weitgehend erhalten, was sich weiterhin positiv auf einen vergleichsweise konstanten Wirkungsgradverlauf der Energiespeichereinheit über der Zeit auswirkt. Die erste Elektrode der Energiespeichereinheit kann gleichermaßen als negative Elektrode, die zweite Elektrode entsprechend als positive Elektrode bezeichnet werden. Die Elektroden können vorteilhaft porös sein.

Bevorzugt ist das die Versinterung hemmende Material Metalloxid-Partikel. Insofern können die der ersten Elektrode zugeordneten metallischen Partikel jeweils als metallische Matrix mit darin vorzugsweise gut dispergiert verteilten Metalloxid-Partikeln und somit insgesamt als oxiddispersionsgehärtete Partikel, kurz ODS-Partikel (engl. oxide dispersion strengthend particles) betrachtet werden. Die metallischen Partikel liegen demnach als sogenannte Dispersions- bzw. ODS-Legierung vor. Die die Agglomerierung respektive Versinterung der metallischen Partikel verhindernde Wirkung der Metalloxid-Partikel wird darin vermutet, dass die Metalloxid-Partikel zusätzliche Störungen bzw. Fehlstellen in das Kristallgitter der metallischen Partikel einbringen, welche mögliche Versetzungsbewegungen hindern, wodurch im weiteren zur Versinterung führende diffusionsbedingte Halsbildungen an den jeweiligen Grenzflächen der metallischen Partikeln unterbunden werden. Die die Metalloxid-Partikel enthaltenden metallischen Partikel, d. h. die ODS-Partikel sind vorteilhaft derart hergestellt, dass Entmischungserscheinungen beispielsweise aufgrund unterschiedlicher Dichten nicht auftreten.

Die Metalloxid-Partikel sind bevorzugt Ceroxid- und/oder Zirkoniumoxid-Partikel. Selbstverständlich sind in Ausnahmefällen andere Metalloxid-Partikel bzw. keramische Partikel einsetzbar.

Es ist ferner möglich, dass die Metalloxid-Partikel mit Dotierstoffen dotiert sind. Zur Dotierung kommen beispielsweise für Zirkoniumoxid Scandium und/oder Yttrium und für Ceroxid Gadolinium und/oder Samarium in Betracht. Es zeigte sich, dass Dotierstoffe die vorbeschriebene Wirkung der Metalloxid-Partikel weiter erhöhen, da die Dotierstoffe vermutlich die Verzerrung der Gitterstruktur der als Matrix dienenden metallischen Partikel zusätzlich unterstützen, weshalb, wie erläutert, eine Versinterung bedingende Diffusionsvorgänge wenigstens gehemmt werden. Grundsätzlich bietet es sich an, dem Elektrolytmaterial ähnliche Dotierstoffe zu verwenden.

Zweckmäßig werden die metallischen Partikel mit dem die Versinterung hemmenden Material mechanisch legiert. Mechanisches Legieren (engl. mechanical alloying) gehört zu den pulvermetallurgischen Herstellungsverfahren, wobei der Unterschied zur konventionellen Pulvermetallurgie darin besteht, dass nach dem Intensivmahlen jeder einzelne Partikel als Legierung betrachtet werden kann. Das bedeutet, dass für jedes einzelne Partikel im Wesentlichen eine gleichmäßige Legierungselementverteilung, d. h. im erfindungsgemäßen Sinne eine gleichmäßige Verteilung von Metalloxid-Partikeln in der metallischen Matrix vorliegt. Im Rahmen des mechanischen Legierens wird auf die Verhinderung von Entmischungserscheinungen der Metalloxid-Partikel in der metallischen Matrix geachtet.

Bevorzugt weisen die metallischen Partikel je einen molaren Anteil von 1 bis 20 %, insbesondere 5 bis 10 %, an dem die Versinterung hemmenden Material auf. Dementsprechend sind mit den genannten Füllgraden gute Eigenschaften bezüglich der Verhinderung etwaiger Agglomerationen bzw. Versinterungen der metallischen Partikel erzielbar. In Ausnahmefällen können gleichwohl höhere oder niedrigere Anteile an dem die Versinterung hindernden Material respektive den Metalloxid-Partikeln vorliegen.

Die metallischen Partikel sind zweckmäßig aus Eisen und/oder Mangan gebildet. Diese Materialien gewährleisten den mehrfach wiederholten Ablauf von Redoxvorgängen, sind also mehrfach oxidier- bzw. reduzierbar, was für einen nachhaltigen Betrieb bzw. das oftmaliges Wiederaufladen der Energiespeichereinheit von wesentlicher Bedeutung ist. Die metallischen Partikel dienen insofern als chemische Energiespeicher. Ähnliche Materialien sind selbstverständlich ebenso einsetzbar.

In Weiterbildung der Erfindung kann die erste Elektrode eine gitterartige Hohlkammerstruktur aufweisen, wobei die metallischen Partikel in in den Zwischenräumen der Hohlkammerstruktur angeordneten Aufnahmeräumen vorgesehen sind. Entsprechend weist die Hohlkammerstruktur insbesondere in den von ihr mit den metallischen Partikeln befüllten Aufnahmeräumen reaktive Bereiche auf, an und/oder in denen die zum Be- und Entladen der erfindungsgemäßen Energiespeichereinheit erforderlichen chemischen Reaktionen, d. h. Redoxvorgänge ablaufen. Die Hohlkammerstruktur ist dabei vorteilhaft gleichermaßen durchlässig für Ionen, insbesondere Sauerstoffionen, sowie für durch insbesondere an den Grenzflächen zu den Aufnahmeräumen ablaufende Oxidationsprozesse freigewordene Elektronen.

Alternativ dazu kann die erste Elektrode mit einer Zwischenräume ausbildenden kammartigen Struktur verbunden sein, wobei die Zwischenräume der ersten Elektrode zugewandt und mit den metallischen Partikeln befüllt sind. Hierbei dienen die sich von den von der ersten Elektrode wegerstreckenden, im Wesentlichen länglichen kammartigen Zwischenräume als Aufnahmeräume für die metallischen Partikel bzw. die ODS-Partikel. Die kammartige Struktur ist als sogenannter Interkonnektor zu verstehen, welcher im Falle von mehreren elektrisch gekoppelten Energiespeichereinheiten einerseits eine elektrische Verbindung der Energiespeichereinheiten herstellt, andererseits jedoch als eine physikalische Barriere zwischen benachbarten ersten und zweiten Elektroden hintereinander geschalteter bzw. aufeinanderfolgender Energiespeichereinheiten fungiert.

In Weiterbildung der Erfindung kann zwischen den metallischen Partikeln ein redoxaktives Gasgemisch, insbesondere ein Wasserstoff-Wasser-Gemisch ($H_2/H_2O$), vorgesehen sein. Diese auch als sogenannte "redox-shuttles" zu bezeichnenden Verbindungen verbessern bzw. stabilisieren die zwischen den durch den Elektrolyten migrierten Sauerstoffionen und den metallischen Partikeln auftretenden Redoxreaktionen und können den Wirkungsgrad der Energiespeichereinheit insgesamt stabilisieren bzw. erhöhen. Neben bzw. alternativ zu Wasserstoff-Wasser-Gemischen sind vergleichbare gasförmige Redoxpaare verwendbar.

Neben den beiden genannten Aufbauten ist das erfindungsgemäße Prinzip der Zulegierung von Metalloxid-Partikeln in metallische Partikel, d. h. die Verwendung von ODS-Partikeln auf jegliche Anordnung von Energiespeichereinheiten respektive Brennstoffzellen anwendbar.

Für den funktionsgemäßen Betrieb der wiederaufladbaren Energiespeichereinheit ist es vorteilhaft, wenn die zweite Elektrode aus einem porösen sauerstoffdurchlässigen, Material gebildet ist. Derart ist im Entladebetrieb der Energiespeichereinheit eine Reduktion von insbesondere kontinuierlich zugeführtem Luftsauerstoff zu Sauerstoffionen möglich.

Entsprechend ist es zweckmäßig, wenn der Elektrolyt ein Festelektrolyt mit einer Durchlässigkeit für Sauerstoffionen ist. Derart können die an der zweiten Elektrode gebildeten Sauerstoffionen durch den Elektrolyten in Richtung der ersten Elektrode diffundieren. Der Elektrolyt ist gegenüber Elektronen undurchlässig, um Kurzschlüsse der Energiespeichereinheit zu verhindern.

Daneben betrifft die Erfindung einen Energiespeicher, umfassend mehrere Energiespeichereinheiten wie vorstehend beschrieben. Die Energiespeichereinheiten sind derart geschaltet bzw. miteinander verbunden, dass der Energiespeicher eine der Anzahl der hintereinandergeschalteten Energiespeichereinheiten entsprechende Leistung aufweist.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Figur 1    eine Prinzipdarstellung eines Ausschnitts einer Energiespeichereinheit gemäß einer ersten erfindungsgemäßen Ausführungsform;

Figur 2    eine Prinzipdarstellung eines Ausschnitts einer Energiespeichereinheit gemäß einer zweiten erfindungsgemäßen Ausführungsform;

Figur 3    die Einzelheit aus Fig. 2 in einer vergrößerten Darstellung; und

Figur 4    eine Prinzipdarstellung eines erfindungsgemäßen der ersten Elektrode zugeordneten metallischen bzw. ODS-Partikels.

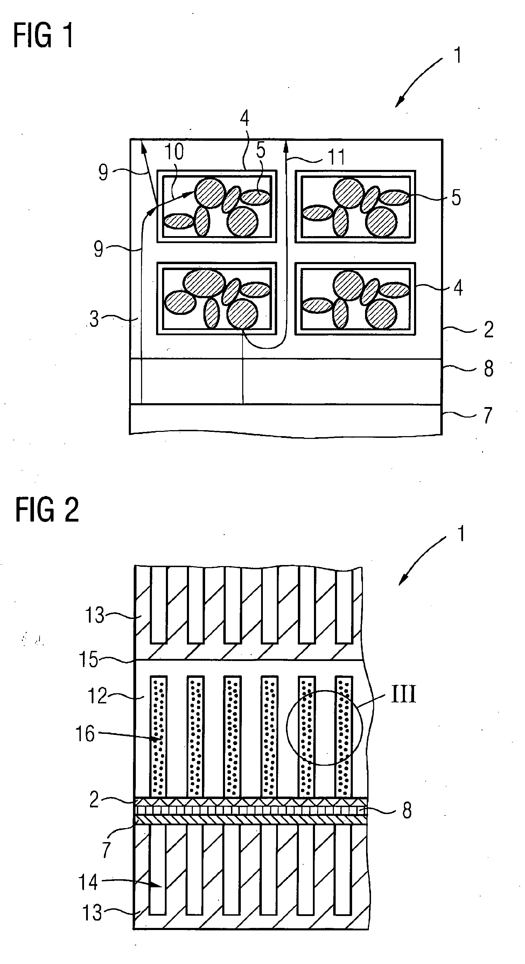

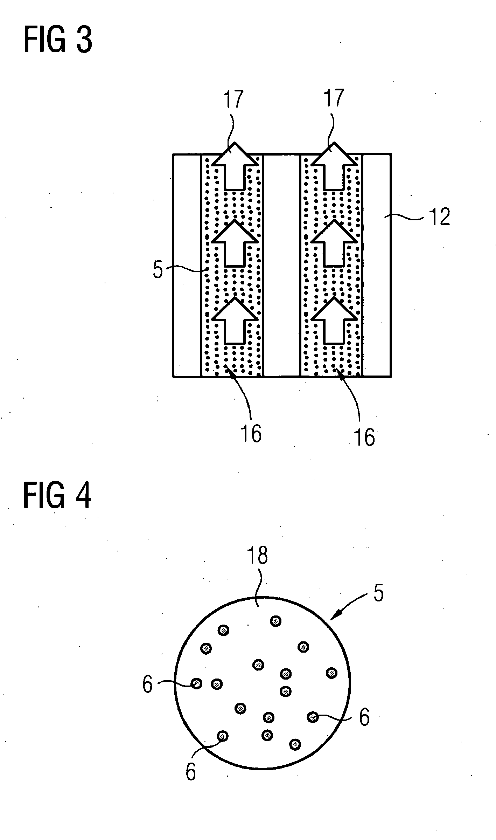

Fig. 1 zeigt eine Prinzipdarstellung eines Ausschnitts einer Energiespeichereinheit 1 gemäß einer ersten erfindungsgemäßen Ausführungsform. Eine poröse negative bzw. erste Elektrode 2 ist als gleichmäßige dreidimensionale gitterartige Hohlkammerstruktur 3 ausgebildet, wobei in den regelmäßig verteilt angeordneten Aufnahmeräumen 4 jeweils oxiddispersionsgehärtete Partikel, kurz ODS-Partikel 5, d.h. Partikel aus einer im Ladebetrieb der Energiespeichereinheit 1 reduzierbaren und im Entladebetrieb der Energiespeichereinheit 1 oxidierbaren metallischen Matrix 18, beispielsweise einer Eisenmatrix, mit darin fein verteilten Metalloxid-Partikeln 6, eingefüllt sind. Derart können im Vergleich zu der Verwendung reiner Metall-Partikel ohne darin verteilte Metalloxid-Partikel 6 bedingt durch die hohen Betriebstemperaturen der Energiespeichereinheit 1 oberhalb von 500°C, insbesondere im Bereich von 600 - 800°C, auftretende Agglomeratbildungen durch Versinterung der Metall-Partikel verhindert werden. Erfindungsgemäß bestehen die ODS-Partikel 5 demnach aus einer Metallmatrix 18 mit darin insbesondere durch mechanisches Legieren zulegierte, die Versinterung hemmende Materialien in Form der Metalloxid-Partikel 6. Bei den ODS-Partikeln 5 handelt es sich demnach um eine Dispersionslegierung der Metalloxid-Partikel 6 in der Metallmatrix 18 (vgl. Fig. 4).

Die Metalloxid-Partikel 6 basieren beispielsweise auf Ceroxid und können etwa mit Samarium dotiert sein. Die die Versinterung verhindernde bzw. hemmende Wirkungsweise der Metalloxid-Partikel 6 wird darin gesehen, dass die Metalloxid-Partikel 6 zusätzliche Fehlstellen in die metallische Gitterstruktur der Metallmatrix 18 einbringen, wodurch Versetzungsbewegungen, d. h. diffusionsbasierte Stofftransportvorgänge, wie sie beispielsweise bei der Sinterhalsbildung auftreten, verhindert werden.

Die ODS-Partikel 5 haben beispielsweise eine mittlere Korngröße von ca. 30 - 50 $\mu$m. Die Größe der Metalloxid-Partikel 6 liegt beispielsweise im Bereich von 0,5 $\mu$m. Es ist sowohl betreffend die ODS-Partikel 5 als auch die Metalloxid-Partikel 6 jede Kornform denkbar. Typische Füllgrade an Metalloxid-Partikeln 6 in der Metallmatrix 18 liegen beispielsweise zwischen 5 und 10 Mol-%.

Die Funktionsweise der erfindungsgemäßen Energiespeichereinheit 1 ist im Wesentlichen bekannt und beruht bezogen auf deren Entladebetrieb darauf, dass an der in Fig. 1 nur schematisch gezeigten zweiten bzw. positiven porösen Elektrode 7 z. B. über Gasspülung kontinuierlich zugeführter Luftsauerstoff zu Sauerstoffionen reduziert wird, welche Sauerstoffionen durch einen Festkörper-Elektrolyten 8 in die erste Elektrode 2 diffundieren. Der Elektrolyt 8 ist für Elektronen undurchlässig, so dass Kurzschlüsse der Energiespeichereinheit 1, d. h. insbesondere zwischen den Elektroden 2, 7 verhindert werden.

Die durch den Elektrolyten 8 diffundierten Sauerstoffionen können über zwei unterschiedliche Arten mit den in den Aufnahmeräumen 4 befindlichen ODS-Partikeln 5 reagieren. Gemäß einer ersten Alternative, gekennzeichnet durch die Pfeile 9, 10 werden Sauerstoffionen zunächst an den Grenzflächen der Aufnahmeräume 4 zu elementarem Sauerstoff oxidiert (vgl. Pfeile 9), es gilt:

$$O^{2-} \rightarrow 1/2\ O_2 + 2e^- \quad (1).$$

Der elementare Sauerstoff diffundiert im Weiteren in das Innere der Aufnahmeräume 4 zu den ODS-Partikeln 5, wobei die Metallmatrix 18 oder Teile davon zu Metalloxiden oxidiert (vgl. Pfeil 10). Es gilt:

$$1/2\ O_2 + Me \rightarrow MeO \quad (2).$$

Hierbei sind alle inneren Grenzflächen der Hohlkammerstruktur 3 aktiv.

Gemäß einer zweiten Alternative können die durch den Elektrolyten 8 diffundierten Sauerstoffionen die an den Grenzflächen der Aufnahmeräume 4 anliegenden ODS-Partikel 5 respektive die Metallmatrix 18 oder Teile davon direkt zu Metalloxiden oxidieren (vgl. Pfeil 11), es gilt:

$$O^{2-} + Me \rightarrow MeO + 2e^- \quad (3).$$

Hierbei sind vornehmlich die Grenzflächen zwischen den ODS-Partikeln 5 und den Aufnahmeräumen 4 aktiv.

Vorteilhaft befinden sich die ODS-Partikel 5 innerhalb der Aufnahmeräume 4 in einer inerten, d. h. beispielsweise einer Stickstoffatmosphäre. Alternativ kann zwischen den ODS-Partikeln 5 ein redoxaktives Gasgemisch, insbesondere ein Wasserstoff-Wasser-Gemisch ($H_2/H_2O$), vorgesehen sein, welches als sogenanntes "redox-shuttle" dient und die ablaufenden Redoxvorgänge katalytisch unterstützt.

Fig. 2 zeigt eine Prinzipdarstellung eines Ausschnitts einer Energiespeichereinheit 1 gemäß einer zweiten erfindungsgemäßen Ausführungsform. Die Energiespeichereinheit 1 besteht gleichermaßen aus einer ersten Elektrode 2 (negative Elektrode) und einer zweiten Elektrode 7 (positive Elektrode), welche durch einen für Sauerstoffionen durchlässigen Festkörper-Elektrolyten 8 voneinander getrennt sind. Ersichtlich sind sowohl der ersten Elektrode 2 als auch der zweiten Elektrode 7 kammartige Strukturen im Sinne von Interkonnektoren 12, 13 zugeordnet, wobei der der zweiten Elektrode 7 zugeordnete Interkonnektor 13 als Gasverteiler dient, durch dessen kammerartige Zwischenräume 14 kontinuierlich Luftsauerstoff strömt, welcher über die zweite Elektrode 7 vor Durchtritt durch den Elektrolyten 8 zu Sauerstoffionen reduziert wird. Die Interkonnektoren 12, 13 sind unter Zwischenschaltung einer elektrischen Last elektrisch miteinander verbunden (nicht gezeigt).

Angedeutet ist ferner die Möglichkeit der Hintereinanderschaltung mehrerer Energiespeichereinheiten 1, da sich am oberen Ende des Interkonnektors 12 eine bipolare Schicht 15 anschließt, welche eine elektrische Barriere zu einem Interkonnektor 13 einer zweiten Elektrode 7 einer folgenden Energiespeichereinheit 1 herstellt. Eine entsprechende Anordnung ist auch an dem unteren Ende der Energiespeichereinheit 1, d. h. im Anschluss an den Interkonnektor 13 denkbar. Derart ist eine Stapelung bzw. Hintereinanderschaltung einer Vielzahl an Energiespeichereinheiten 1 zur Ausbildung eines Energiespeichers möglich.

Wie aus Fig. 2 und insbesondere aus Fig. 3 hervorgeht, sind die von der ersten Elektrode 2 abgehenden kammerartigen Zwischenräume 16 des Interkonnektors 12 mit den als Energiespeicher der Energiespeichereinheit 1 agierenden ODS-Partikeln 5 befüllt. Derart weist die Energiespeichereinheit 1 eine hohe Energiespeicherkapazität auf, da sie den Energiespeicher, d. h. die ODS-Partikel 5 selbst enthält. Selbstverständlich richtet sich die Erfindung auch an andersartig aufgebaute Energiespeichereinheiten 1 beispielsweise mit einem extern zu der und über Ionen- bzw. Elektronenleiter mit dieser verbundenen angeordneten Speicher für die ODS-Partikel 5.

Die durch den Elektrolyten 8 diffundierten Sauerstoffionen treten in Kontakt mit der porösen netzwerkartigen Struktur aus den ODS-Partikeln 5. Zusätzlich befindet sich in den Poren der netzwerkartigen Struktur, d. h. zwischen den ODS-Partikeln 5 ein redoxaktives $H_2/H_2O$-Gasgemisch. Die Sauerstoffionen werden zunächst zu elementarem Sauerstoff reduziert, welcher durch die Zwischenräume der ODS-Partikel 5 strömt (vgl. Pfeil 17). Dabei oxidiert der Sauerstoff die ODS-Partikel 5 respektive die Metallmatrix 18 oder Teile davon zu entsprechenden Metalloxiden, die dabei entstehenden freien Elektronen liefern im Entladebetrieb der Energiespeichereinheit 1 den Strom für einen Verbraucher.

Gleichermaßen ist durch die Zulegierung der Metalloxid-Partikel 6 in die Metallmatrix 18, d.h. durch den Einsatz der ODS-Partikel 5 auch in dieser erfindungsgemäßen Ausführungsform im Vergleich zu unlegierten rein metallischen Partikeln eine Agglomeration durch Versinterung rein metallischer Partikel bedingt durch die hohen Betriebstemperaturen der Energiespeichereinheit 1 oberhalb von 500° C verhindert. Die Energiespeichereinheit 1 ist demnach gegenüber den aus dem Stand der Technik bekannten Energiespeichereinheiten 1 insbesondere hinsichtlich ihrer Lebensdauer bzw. Standzeit verbessert.

Grundsätzlich betreffen die obigen Ausführungen den Endladebetrieb der Energiespeichereinheit. Die beschriebenen Vorgänge sind jedoch reversibel, d. h. laufen im Ladebetrieb der Energiespeichereinheit 1 entsprechend umgekehrt ab.

**Patentansprüche**

1. Wiederaufladbare Energiespeichereinheit, mit einer ersten und einer zweiten Elektrode, wobei der ersten Elektrode metallische Partikel aus einem im Ladebetrieb der Energiespeichereinheit reduzierbaren und im Entladebetrieb der Energiespeichereinheit oxidierbaren Metall zugeordnet sind, und einem zwischen den Elektroden angeordneten Elektrolyten, **dadurch gekennzeichnet, dass** die metallischen Partikel zusätzlich ein eine Versinterung der metallischen Partikel hemmendes Material in Form von Metalloxid-Partikel enthalten.

2. Wiederaufladbare Energiespeichereinheit nach Anspruch 1, **dadurch gekennzeichnet, dass** die Metalloxid-Partikel Ceroxid- und/oder Zirkoniumoxid-Partikel sind.

3. Wiederaufladbare Energiespeichereinheit nach Anspruch 1 oder 2, **dadurch gekennzeichnet, dass** die Metalloxid-Partikel (6) mit Dotierstoffen dotiert sind.

4. Wiederaufladbare Energiespeichereinheit nach Anspruch 2 und 3, **dadurch gekennzeichnet, dass** die Dotierstoffe für Zirkoniumoxid Scandium und/oder Yttrium und die Dotierstoffe für Ceroxid Gadolinium und/oder Samarium sind.

5. Wiederaufladbare Energiespeichereinheit nach einem der vorangehenden Ansprüche, **dadurch gekennzeichnet, dass** die metallischen Partikel mit dem die Versinterung hemmenden Material mechanisch legiert sind.

6. Wiederaufladbare Energiespeichereinheit nach einem der vorangehenden Ansprüche, **dadurch gekennzeichnet, dass** die metallischen Partikel je einen molaren Anteil von 1 bis 20 %, insbesondere 5 bis 10 %, an dem die Versinterung hemmenden Material aufweisen.

7. Wiederaufladbare Energiespeichereinheit nach einem der vorangehenden Ansprüche, **dadurch gekennzeichnet, dass** die metallischen Partikel aus Eisen und/oder Mangan gebildet sind.

8. Wiederaufladbare Energiespeichereinheit nach einem der vorangehenden Ansprüche, **dadurch gekennzeichnet, dass** die erste Elektrode (2) eine gitterartige Hohlkammerstruktur (3) aufweist, wobei die metallischen Partikel in in den Zwischenräumen der Hohlkammerstruktur (3) angeordneten Aufnahmeräumen (4) vorgesehen sind.

9. Wiederaufladbare Energiespeichereinheit nach einem der Anspruch 1 bis 8, **dadurch gekennzeichnet, dass** die erste Elektrode (2) mit einer Zwischenräume (16) ausbildenden kammartigen Struktur verbunden ist, wobei die Zwischenräume (16) der ersten Elektrode (2) zugewandt und mit den metallischen Partikeln befüllt sind.

10. Wiederaufladbare Energiespeichereinheit nach einem der vorangehenden Ansprüche, **dadurch gekennzeichnet, dass** zwischen den metallischen Partikeln ein redoxaktives Gasgemisch, insbesondere ein Wasserstoff-Wasser-Gemisch, vorgesehen ist.

11. Wiederaufladbare Energiespeichereinheit nach einem der vorangehenden Ansprüche, **dadurch gekennzeichnet, dass** die zweite Elektrode (7) aus einem porösen sauerstoffdurchlässigen, Material gebildet ist.

12. Wiederaufladbare Energiespeichereinheit nach einem der vorangehenden Ansprüche, **dadurch gekennzeichnet, dass** der Elektrolyt (8) ein Festelektrolyt mit einer Durchlässigkeit für Sauerstoff-Ionen ist.

13. Energiespeicher, umfassend mehrere Energiespeichereinheiten (1) nach einem der vorangehenden Ansprüche.

## Claims

1. Rechargeable energy storage unit having a first and a second electrode, the first electrode being associated with metallic particles of a metal which is reducible during charging operation of the energy storage unit and oxidisable during discharging operation of the energy storage unit, and having an electrolyte arranged between the electrodes, **characterised in that** the metallic particles additionally contain a material in the form of metal oxide particles which inhibits sintering of the metallic particles.

2. Rechargeable energy storage unit according to claim 1, **characterised in that** the metal oxide particles are cerium oxide and/or zirconium oxide particles.

3. Rechargeable energy storage unit according to claim 1 or claim 2, **characterised in that** the metal oxide particles (6) are doped with dopants.

4. Rechargeable energy storage unit according to claim 2 and claim 3, **characterised in that** the dopants for zirconium oxide are scandium and/or yttrium and the dopants for cerium oxide are gadolinium and/or samarium.

5. Rechargeable energy storage unit according to any one of the preceding claims, **characterised in that** the metallic particles are mechanically alloyed with the sintering-inhibiting material.

6. Rechargeable energy storage unit according to any one of the preceding claims, **characterised in that** the metallic particles each comprise a molar proportion of 1 to 20%, in particular 5 to 10%, of the sintering-inhibiting material.

7. Rechargeable energy storage unit according to any one of the preceding claims, **characterised in that** the metallic particles are formed of iron and/or manganese.

8. Rechargeable energy storage unit according to any one of the preceding claims, **characterised in that** the first electrode (2) comprises a lattice-like hollow chamber structure (3), wherein the metallic particles are provided in receptacles (4) arranged in the interspaces of the hollow chamber structure (3).

9. Rechargeable energy storage unit according to one of claims 1 to 8, **characterised in that** the first electrode (2) is connected to a comb-like structure forming interspaces (16), the interspaces (16) facing the first electrode (2) and being filled with the metallic particles.

10. Rechargeable energy storage unit according to any one of the preceding claims, **characterised in that** a redox-active gas mixture, in particular a hydrogen-water mixture, is provided between the metallic particles.

11. Rechargeable energy storage unit according to any one of the preceding claims, **characterised in that** the second electrode (7) is formed of a porous oxygen-permeable material.

12. Rechargeable energy storage unit according to any one of the preceding claims, **characterised in that** the electrolyte (8) is a solid electrolyte with permeability to oxygen ions.

13. Energy storage means comprising a plurality of energy storage units (1) according to any one of the preceding claims.

**Revendications**

1. Unité d'accumulation d'énergie rechargeable, comprenant une première électrode et une deuxième électrode, des particules métalliques, en un métal réductible en fonctionnement de charge de l'unité d'accumulation d'énergie et oxydable en fonctionnement de décharge de l'unité d'accumulation d'énergie, étant associées à la première électrode et un électrolyte étant disposé entres les électrodes, **caractérisée en ce que** les particules métalliques contiennent supplémentairement une matière sous forme de particules d'oxyde métallique empêchant un frittage des particules métalliques.

2. Unité d'accumulation d'énergie rechargeable suivant la revendication 1, **caractérisée en ce que** les particules d'oxyde métallique sont des particules d'oxyde de cérium et/ou d'oxyde de zirconium.

3. Unité d'accumulation d'énergie rechargeable suivant la revendication 1 ou 2, **caractérisée en ce que** les particules ( 6 ) d'oxyde métallique sont dopées par des substances de dopage.

4. Unité d'accumulation d'énergie rechargeable suivant la revendication 2 et 3, **caractérisée en ce que** les substances de dopage, pour l'oxyde de zirconium, sont le scandium et/ou l'yttrium et les substances de dopage, pour l'oxyde de cérium, sont le gadolinium et le samarium.

5. Unité d'accumulation d'énergie rechargeable suivant l'une des revendications précédentes, **caractérisée en ce que** les particules métalliques sont alliées mécaniquement à la matière empêchant le frittage.

6. Unité d'accumulation d'énergie rechargeable suivant l'une des revendications précédentes, **carac-**

**térisée en ce que** les particules métalliques ont respectivement une proportion molaire de 1 à 20%, notamment de 5 à 10%, de la matière empêchant le frittage.

7. Unité d'accumulation d'énergie rechargeable suivant l'une des revendications précédentes, **caractérisée en ce que** les particules métalliques sont formées de fer et/ou de manganèse.

8. Unité d'accumulation d'énergie rechargeable suivant l'une des revendications précédentes, **caractérisée en ce que** la première électrode ( 2 ) a une structure ( 3 ) à chambre creuse de type en réseau, les particules métalliques étant prévues dans les espaces ( 4 ) de réception disposés dans les espaces intermédiaires de la structure ( 3 ) de chambre creuse.

9. Unité d'accumulation d'énergie rechargeable suivant l'une des revendications 1 à 8, **caractérisée en ce que** la première électrode ( 2 ) est reliée à une structure de type en peigne constituant des espaces ( 16 ) intermédiaires, les espaces ( 16 ) intermédiaires étant tournés vers la première électrode ( 2 ) et étant remplis des particules métalliques.

10. Unité d'accumulation d'énergie rechargeable suivant l'une des revendications précédentes, **caractérisée en ce qu'**un mélange gazeux à activité rédox, notamment un mélange d'hydrogène et d'eau, est prévu entre les particules métalliques.

11. Unité d'accumulation d'énergie rechargeable suivant l'une des revendications précédentes, **caractérisée en ce que** la deuxième électrode ( 7 ) est formée d'une matière poreuse perméable à l'oxygène.

12. Unité d'accumulation d'énergie rechargeable suivant l'une des revendications précédentes, **caractérisée en ce que** l'électrolyte ( 8 ) est un électrolyte solide ayant une perméabilité aux ions oxygène.

13. Accumulateur d'énergie comprenant plusieurs unités ( 1 ) d'accumulation d'énergie suivant l'une des revendications précédentes.

FIG 1

FIG 2

FIG 3

FIG 4